**Europäisches Patentamt**

**European Patent Office**

**Office européen des brevets**

(19)

(11) Veröffentlichungsnummer : **0 374 812 B1**

(12)  # EUROPÄISCHE PATENTSCHRIFT

(45) Veröffentlichungstag der Patentschrift :
**22.01.92 Patentblatt 92/04**

(21) Anmeldenummer : **89123419.7**

(22) Anmeldetag : **19.12.89**

(51) Int. Cl.⁵ : **B29C 67/22,** B29C 69/00,
C08K 5/00, C08L 25/06,
C08J 9/00, // (C08K5/00,
5:01, 5:02)

(54) **Verfahren zur Herstellung expandierbarer Styrolpolymerisate.**

(30) Priorität : **23.12.88 DE 3843536**

(43) Veröffentlichungstag der Anmeldung :
**27.06.90 Patentblatt 90/26**

(45) Bekanntmachung des Hinweises auf die
Patenterteilung :
**22.01.92 Patentblatt 92/04**

(84) Benannte Vertragsstaaten :
**AT BE DE ES FR GB IT NL**

(56) Entgegenhaltungen :
**DE-A- 2 154 754**
**US-A- 3 420 786**

(73) Patentinhaber : **BASF Aktiengesellschaft**
**Carl-Bosch-Strasse 38**
**W-6700 Ludwigshafen (DE)**

(72) Erfinder : **Hahn, Klaus, Dr.**
**Im Bügen 9**
**W-6719 Kirchheim (DE)**
Erfinder : **Guhr, Uwe, Dr.**
**Beim Hochgericht 9**
**W-6718 Grünstadt (DE)**
Erfinder : **Naarmann, Herbert, Dr.**
**Haardtblick 15**
**W-6719 Wattenheim (DE)**
Erfinder : **Ruppert, Georg**
**An der Steinernen Brücke 9**
**W-6704 Mutterstadt (DE)**
Erfinder : **Back, Wolf-Dieter, Dr.**
**Karolinenstrasse 25**
**W-6730 Neustadt (DE)**
Erfinder : **Dembek, Gerhard, Dr.**
**Prof.-Otto-Dill-Strasse 3**
**W-6702 Bad Dürkheim (DE)**

EP 0 374 812 B1

## Beschreibung

Die Erfindung betrifft ein verbessertes Verfahren zur Herstellung expandierbarer Styrolpolymerisate, die eine organische Bromverbindung als Flammschutzmittel enthalten, durch Strangpressen. Die Stränge werden dabei so rasch abgekühlt, daß sie nicht aufschäumen und anschließend zerkleinert. Das erhaltene Granulat findet nach dem Aufschäumen Verwendung als schüttfähiges Verpackungsmaterial.

Aus der DE-PS 2154754 ist ein Verfahren zur Herstellung expandierbarer Styrolpolymerisate durch Strangpressen bekannt, bei dem man die zylindrischen Stränge durch Walzen und/oder Recken zu Strängen mit ovalem Querschnitt verformt und in Richtung der kleinen Achse des ovalen Querschnitts in Scheiben zerschneidet. Die Styrolpolymerisate können dabei als Flammschutzmittel Bromverbindungen in Kombination mit synergistisch wirkenden Zusätzen enthalten.

Bei der technischen Herstellung von expandierbaren Styrolpolymerisaten, die organische Bromverbindungen als Flammschutzmittel enthalten, tritt beim Strangpressen eine beträchtliche Korrosion der Extruderschnecken auf. Infolge von Lunkerbildung zeigen die durch Aufschäumen erhältlichen Schaumstoffteilchen eine inhomogene Schaumstruktur und damit verbunden eine erhöhte Bruchrate der Teilchen bei der Verwendung als loose-fill-Verpackungsmaterial.

Aufgabe der Erfindung ist es, diese Nachteile zu beseitigen. Diese Aufgabe wird überraschenderweise dadurch gelöst, daß man als synergistisch wirkenden Zusatzstoff Dicumyl verwendet.

Gegenstand der Erfindung ist demgemäß ein Verfahren zur Herstellung expandierbarer Styrolpolymerisate, die eine organische Bromverbindung als Flammschutzmittel und einen synergistisch wirkenden Zusatzstoff enthalten, wobei man ein Gemisch aus Styrolpolymerisat, Treibmittel, Flammschutzmittel und Zusatzstoff strangpreßt, die erhaltenen Stränge so rasch abkühlt, daß sie nicht aufschäumen, und, während sie im Inneren noch plastisch sind, durch Recken und/oder Walzen verformt und dann zerkleinert, dadurch gekennzeichnet, daß man als synergistische wirkenden Zusatzstoff Dicumyl verwendet.

Aus der US-PS 3441524 sind selbstverlöschende Styrolpolymerisate bekannt, die organische Bromverbindungen und substituierte Diphenylethane enthalten. Diese Literatur vermittelt jedoch keine Anregung für die Lösung des Problems der Extruderkorrosion beim Strangpressen von expandierbaren Styrolpolymerisaten, die Bromverbindungen enthalten.

Unter Styrolpolymerisaten werden Polystyrol und Mischpolymerisate des Styrols, die mindestens 50, vorzugsweise mindestens 75 Gew.% Styrol einpolymerisiert enthalten, verstanden. Als Mischpolymerisationskomponente kommen ethylenisch ungesättigte copolymerisierbare Verbindungen in Betracht, z.B. $\alpha$-Methylstyrol, kernhalogenierte Styrole, kernalkylierte Styrole mit 1 bis 4 Kohlenstoffatomen in der Alkylgruppe, Acrylnitril, Methacrylnitril, Ester der Acrylsäure, Methacrylsäure oder Fumarsäure aus Alkoholen mit 1 bis 10 Kohlenstoffatomen, auch Butadien oder N-Vinylverbindungen wie N-Vinylcarbazol, N-Vinylpyridin oder auch geringe Mengen (unter 0,5 Gew.%) an Divinylverbindungen, wie Butandioldiacrylat oder Divinylbenzol.

Die expandierbaren Styrolpolymerisate enthalten Treibmittel. Als solche werden die üblichen verwendet, also aliphatische oder cycloaliphatische Kohlenwasserstoffe oder Halogenkohlenwasserstoffe mit einem Siedepunkt von maximal etwa 90°C, die die Styrolpolymerisate nicht lösen, aber in ihnen homogen verteilt werden können, in Mengen von ca. 2,5 bis 9 Gew.% z.B. n-, i- oder Neo-Pentan, Hexan, Cyclohexan, n- oder i-Butan, Propan, Difluordichlormethan oder Mischungen derselben.

Die Treibmittel können in beliebiger Weise und zu beliebigem Zeitpunkt den Styrolpolymerisaten zugemischt werden, z.B. schon bei der Polymerisation der Monomeren oder erst im Extruder, aus dem die zylindrischen Stränge gepreßt werden.

Als organische Bromverbindungen werden die üblicherweise als Flammschutzmittel verwendeten Bromverbindungen eingesetzt, die im allgemeinen mindestens 2 Bromatome enthalten und einen Bromgehalt von mindestens 40 Gew.% aufweisen. Geeignete Bromverbindungen sind 1,2,3,4-Tetrabrombutan, 1, 2,4-Tribrombutan, Tetrabrompentan, bromsubstituierte Cycloalkane, wie 1-Chlor-2, 3,4,5,6-pentabromcyclohexan, 1,2,3,4,5,6-Hexabromcyclohexan, 1,2,5,6,9,10-Hexabromcyclodecan, Octabromcyclohexadecan, Dibrommethylbenzol, Pentabromdiphenylether, Ester und Acetale des Dibrompropanols, wie Tris-(2,3-dibrompropyl)phosphat. Bevorzugt wird Hexabromcyclodecan verwendet.

Die organische Bromverbindung wird in üblichen wirksamen Mengen verwendet. Die Formmasse soll einen Bromgehalt zwischen 0,3 und 5 Gew.% insbesondere zwischen 0,5 und 4 und vorzugsweise zwischen 0,8 und 3 Gew.% Brom aufweisen.

Als erfindungsgemäße Zusatzstoffe enthalten die Styrolpolymerisate Dicumyl (2,3-Diphenyl-2,3-dimethylbutan), und zwar üblicherweise in einer Menge von 0,05 bis 1 Gew.%, vorzugsweise 0,1 bis 0,5 Gew.%, insbesondere 0,1 bis 0,3 Gew.%, bezogen auf das Styrolpolymerisat.

Die expandierbaren Styrolpolymerisate können darüber hinaus weitere übliche Zusatzstoffe, wie Farbstoffe, Füllstoffe, Keimbildner, Stabilisatoren usw. in wirksamen Mengen enthalten.

Zur Herstellung der expandierbaren Styrolpolymerisate werden die Styrolpolymerisate, Treibmittel, Flammschutzmittel und Zusatzstoffe in einem Extruder vermischt, aufgeschmolzen und zu einem Strang angepreßt. Dazu können Düsen beliebigen Querschnitts je nach der gewünschten Querschnittsform des Stranges verwendet werden. Bevorzugt werden Stränge mit einem zylindrischen Querschnitt hergestellt, die einen Durchmesser von 3 bis 15, vorzugsweise 5 bis 10 mm aufweisen. Die Massetemperatur beim Austritt aus der Düse liegt im allgemeinen bei 90 bis 150°C, insbesondere bei 110 bis 130°C. Die Stränge werden nun durch ein Kühlbad so rasch abgekühlt, daß sie nicht oder praktisch nicht aufschäumen. Die Abkühlung der Stränge erfolgt an der Oberfläche, während die Stränge im Inneren noch heiß und plastisch sind. Die Stränge können in diesem Zustand noch gereckt und/oder verformt werden. Zu diesem Zweck werden sie, zweckmäßig über Umlenkwalzen, aus dem Kühlbad herausgeführt und durch ein Walzenpaar geführt. Kombinationen von je einer elastischen und einer nicht elastischen Walze haben sich hierfür gut bewährt, z.B. aus Gummi und Stahl. Die Laufgeschwindigkeit der Walzen kann so eingestellt werden, daß die Stränge mehr oder weniger gereckt oder nicht gereckt werden. Durch das Recken kann die Querschnittsfläche des Stranges beispielsweise um 5 bis 60% verringert werden. Der Anpreßdruck der Walzen kann so eingestellt werden, daß die Stränge mehr oder weniger verformt werden und einen ovalen bzw. ellipsenähnlichen Querschnitt annehmen, beispielsweise mit einem Achsenverhältnis von 1 : 1,3 bis 1 : 2. Für das Recken und/oder Verformen des Strangs können auch mehrere Walzenpaare hintereinandergeschaltet werden. Die Walzen sind in der Regel glatt, aber auch profilierte Walzen sind geeignet. Als Einzug für Granulieranlagen übliche Walzen können dazu verwendet werden.

Zweckmäßig unmittelbar hinter den Walzen, also praktisch noch bei gleicher Temperatur und in einem Zustand, in dem das Innere der Stränge plastisch ist, werden die Stränge zerkleinert. Vorzugsweise werden sie durch scharfe rotierende Messer in Richtung der kleinen Achse des ovalen Querschnitts in Scheiben geschnitten. Die erhaltenen ovalen Scheiben weisen meist eine Dicke auf, die sich zur kleinen Achse des Strangquerschnitts wie 1 : 1,5 bis 1 : 10, vorzugsweise wie 1 : 2 bis 1 : 6 verhält.

Die Verformung bzw. Verstreckung durch Walzen und das Zerschneiden der Stränge erfolgt im allgemeinen bei einer mittleren Temperatur zwischen 50 und 90°C, vorzugsweise 60 bis 80°C. Die Temperatur läßt sich am einfachsten durch Messung der Temperatur des abgeschlagenen Granulats unmittelbar nach seiner Herstellung messen.

Durch die Verformung bzw. Verstreckung und das Zerkleinern der Stränge, während diese im Innern noch plastisch sind, erhält das Granulat innere Spannungen. Das führt dazu, daß sich die Scheiben vor und insbesondere nach dem Aufschäumen leicht verkrümmen. Man erhält aus ovalen Scheiben des expandierbaren Materials durch Aufschäumen konvexkonklave oder sattelförmige Schaumstoffscheiben, die sich bei Druckbelastung ineinander verhaken und die hervorragend as schüttfähiges und rüttelfähiges Polster- und Verpackungsmaterial geeignet sind.

Das Schäumen erfolgt in an sich bekannter Weise in handelsüblichen Verschäumgeräten z.B. mittels Dampf von 100 bis 150°C. Meist werden die Teilchen bis zu einem Schüttgewicht von 4 bis 15 g/l aufgeschäumt.

Durch die erfindungsgemäße Verwendung von Dicumyl als Zusatzstoff kann im Gegensatz zu den üblichen Synergisten, wie Dicumylperoxid, der Anteil an organischen Bromverbindungen, der für gute Selbstverlöscheigenschaften erforderlich ist, drastisch gesenkt werden. Gleichzeitig wird üblicherweise die Korrosion der Extruder weitestgehend verhindert. Überraschenderweise wird durch die Mitverwendung von Dicumyl die Lunkerbildung herabgesetzt, was sich bereits durch Erhöhung der Dichte der expandierbaren Teilchen bemerkbar macht, und gleichzeitig wird die Bruchrate der daraus hergestellten Schaumstoffteilchen reduziert.

Die in den Beispielen genannten Teile sind Gewichtsteile.

Beispiele 1 bis 9

Durch Suspensionspolymerisation hergestelltes Polystyrol, das 6 Gew.% Pentan als Treibmittel enthält, wird unter Zusatz der in der Tabelle angegebenen Mengen an Hexabromcyclododecan (HBCD) als Flammschutzmittel und der Zusatzstoffe in einem geheizten Zweiwellenextruder (Typ ZSK 120) plastifiziert und bei einer Massetemperatur von 130°C durch eine Lochplatte mit Düsendurchmessern von 8 mm in ein Wasserbad von 20°C gepreßt und die Stränge nach einer Verweilzeit von 15 Sekunden über Umlenkrollen einem Walzenpaar zugeführt, das aus einer Stahlwalze und einer Gummiwalze besteht. Dabei wird durch gleichzeitiges Recken und Verformen der zylindrische Strang zu einem ovalen Querschnitt mit Durchmessern 5 mm/8,5 mm verformt und anschließend durch rotierende Messer zu 2 mm dicken Scheiben zerkleinert. Das Granulat weist unmittelbar nach der Herstellung eine Temperatur von 72°C auf.

Durch Verschäumen mit strömendem Dampf erhält man ovale Schaumstoffscheiben, die leicht gebogen sind und ein Schüttvolumen von etwa 8 g/l aufweisen. Das Schäumgut ist ausgezeichnet als loses, rüttelfestes Verpackungsmaterial geeignet. Die angegebene Verlöschzeit wird gemessen durch Einfüllen der Schaumstoffscheiben nach 72 Std. Zwischenlagerung in einen Drahtgewebekorb (100 × 150 × 150 mm) und Entzünden des Schaumstoffs mit einer Erdgasflamme. Die Zeit bis zum Erlöschen der Flamme wird als Mittelwert aus 20 Einzelmessungen bestimmt. Die Ergebnisse der Versuche sind in der Tabelle zusammengestellt.

Tabelle

| Beispiel | HBCD Gew.% | Synergist Gew.% | Schaumstruktur | Verlöschzeit (sec) | Schüttdichte des Granulsts (g/l) | Korrosion der Extruder- schnecke nach 100 Tagen[1] |
|---|---|---|---|---|---|---|
| 1 | 0 | 0 | sehr homogen | brennt ab* | 605 | 0 |
| 2 | 1 | 0 | homogen | brennt ab* | 600 | 1 |
| 3 | 2 | 0 | inhomogen* | 20* | 545 | 2* |
| 4 | 3 | 0 | sehr inhomogen* | 4 | 510 | 3* |
| 5 | 1 | 0,2 Dicumylperoxid | inhomogen* | brennt ab* | 580 | 1 |
| 6 | 2 | 0,2 Dicumylperoxid | inhomogen* | 18* | 560 | 2* |
| 7 | 3 | 0,2 Dicumylperoxid | sehr inhomogen* | 3 | 500 | 3* |
| 8 (Erfindung) | 1 | 0,2 Dicumyl | homogen | 4 | 595 | 0 |
| 9 (Erfindung) | 2 | 0,2 Dicumyl | homogen | 2 | 590 | 1 |

1)  0 = nicht erkennbar; 1 = unbedeutend; 2 = schwach, 3 = stark

*  unzureichende Eigenschaften

EP 0 374 812 B1

## Patentansprüche

1. Verfahren zur Herstellung expandierbarer Styrolpolymerisate, die eine organische Bromverbindung als Flammschutzmittel und einen synergistischen Zusatzstoff enthalten, wobei man ein Gemisch aus Styrolpolymerisat, Treibmittel, Flammschutzmittel und Zusatzstoff strangpreßt, die erhaltenen Stränge so rasch abkühlt, daß sie nicht aufschäumen, und, während sie im Inneren noch plastisch sind, durch Recken und/oder Walzen verformt und dann zerkleinert, dadurch gekennzeichnet, daß man als synergistisch wirkenden Zusatzstoff Dicumyl verwendet.

2. Verfahren nach Anspruch 1, daß man Dicumyl in einer Menge von 0,05 bis 1 Gew.%, bezogen auf das Styrolpolymerisat, verwendet.

3. Verfahren nach einem der Ansprüche 1 oder 2, dadurch gekennzeichnet, daß man die Stränge zu einem ovalen Querschnitt verformt und in Richtung der kleinen Achse des ovalen Querschnitts in Scheiben schneidet.

## Claims

1. A process for the preparation of an expandable styrene polymer which contains an organic bromine compound as flameproofing agent and a synergistic additive, in which a mixture of a styrene polymer, a blowing agent, a flameproofing agent and an additive is extruded, and the resultant extrudate is cooled so rapidly that it does not expand, and, while it is still internally plastic, is shaped by stretching and/or rolling and then comminuted, which comprises using dicumyl as the synergistic additive.

2. A process as claimed in claim 1, wherein dicumyl is used in an amount of from 0.05 to 1% by weight, based on the styrene polymer.

3. A process as claimed in claim 1 or 2, wherein the extrudate is shaped to give an oval cross-section and is cut into disks in the direction of the short axis of the oval cross-section.

## Revendications

1. Procédé pour la préparation de polymères expansibles du styrène, contenant un composé organique du brome en tant qu'agent ignifugeant et additif synergétique, dans lequel on extrude un mélange d'un polymère du styrène, d'un gonflant, d'agent ignifugeant et d'additif, on refroidit les boudins obtenus suffisamment rapidement pour qu'ils ne s'expansent pas et, pendant qu'ils sont encore plastiques à l'intérieur, on les façonne par étirage et/ou laminage puis on les broie, caractérisé en ce que l'additif à effet synergétique utilisé est le dicumyle.

2. Procédé selon la revendication 1, caractérisé en ce que l'on utilise le dicumyle en quantités de 0,05 à 1% en poids du poids du polymère du styrène.

3. Procédé selon une des revendications 1 ou 2, caractérisé en ce que l'on façonne les boudins de manière à leur donner une section ovale et on les découpe en disques dans la direction du petit axe de la section ovale.